# EUROPÄISCHE PATENTSCHRIFT

(11) **EP 1 045 136 B1**
(45) Veröffentlichungstag und Bekanntmachung des Hinweises auf die Patenterteilung: **26.11.2008**
(21) Anmeldenummer: 99119546.2
(22) Anmeldetag: 01.10.1999
(51) Int. Cl.: F02M 61/04, F02M 61/08, F02M 61/18, F02B 3/12

(54) **Verfahren zum Betrieb einer Hubkolbenbrennkraftmaschine und Einspritzdüse zur Durchführung des Verfahrens**
Method for operating a reciprocating internal combustion engine and injection nozzle for carrying out the method
Procédé de fonctionnement d'un moteur à combustion interne à piston alternatif et buse d'injection pour la mise en oeuvre de ce procédé

(30) Priorität: 13.04.1999 DE 19916485
(43) Veröffentlichungstag der Anmeldung: 18.10.2000
(73) Patentinhaber: Daimler AG, 70327 Stuttgart (DE)
(72) Erfinder: Jorach, Rainer Werner, Dr., 71686 Remseck-Aldingen (DE); Raab, Alois, 73560 Böbingen (DE); Schloz, Eckart, 71672 Marbach (DE); Schnabel, Martin, 73430 Aalen (DE); Wirbeleit, Friedrich, Dr., 73733 Esslingen (DE)

(56) Entgegenhaltungen:
- DE-A- 4 228 359
- DE-A- 4 340 883
- DE-A- 19 606 087
- GB-A- 1 521 065
- US-A- 4 195 783

## Beschreibung

Die Erfindung betrifft ein Verfahren zum Betrieb einer Hubkolbenbrennkraftmaschine nach dem Oberbegriff der unabhängigen Ansprüche 1 und 2 und eine Einspritzdüse nach dem Oberbegriff des unabhängigen Anspruchs 3.
Bei modernen, schnell laufenden Hubkolbenbrennkraftmaschinen, die mit Dieselkraftstoff und Selbstzündung arbeiten, wird der Kraftstoff unmittelbar in einen Arbeitsraum eingespritzt, der in der Regel eine Kolbenmulde einschließt. Der eingespritzte Kraftstoff bildet ein mehr oder weniger homogenes Gemisch aus Dieselkraftstoff und Luft, wobei die Last der Hubkolbenbrennkraftmaschine geregelt wird, indem die eingespritzte Kraftstoffmenge variiert wird. Das Kraftstoff-Luftgemisch zündet, wenn im Arbeitsraum ein zündfähiges Gemisch vorhanden ist und die Verdichtungstemperatur im Arbeitsraum die Selbstzündungstemperatur des Kraftstoff-Luftgemisches erreicht oder überschreitet.

Zur vollständigen Verbrennung wird eine gute Verteilung des Kraftstoffs mit der Luftladung angestrebt. Wird der Kraftstoff homogen auf die Luftladung des Arbeitsraums verteilt, so daß ein homogenes Kraftstoff-Luftgemisch entsteht, besteht im unteren Lastbereich der Hubkolbenbrennkraftmaschine, wenn eine geringe Kraftstoffmenge auf eine große Luftladung im Arbeitsraum trifft, die Gefahr, daß das Verhältnis von Kraftstoff zur Luft an keiner Stelle des Arbeitsraums die Voraussetzung für eine Zündfähigkeit erreicht. Andererseits besteht im Vollastbereich der Hubkolbenbrennkraftmaschine, wenn eine große Menge Kraftstoff gleichmäßig auf die Luftladung im Arbeitsraum verteilt wird, die Gefahr, daß an vielen Stellen des Arbeitsraums die Zündbedingungen erreicht werden und daher der Kraftstoff mit einem schnellen, großen Druckanstieg und zahlreichen Druckspitzen verbrennt, was eine klopfende Verbrennung zur Folge hat.

Es ist bekannt, den Kraftstoff heterogen auf die Luftladung zu verteilen, um eine harmonisch ablaufende Verbrennung zu erzielen. Dabei entstehen im Arbeitsraum Zonen mit überfetteten Kraftstoff-Luftgemischen, die sich durch die Luftbewegung im Arbeitsraum zu zündfähigen Gemischen entwickeln, so daß eine gleichmäßige Verbrennung stattfindet.
Bei dieser heterogenen Verbrennung führt Luftmangel in den fetten Zonen zur Rußbildung und Verbrennung in stoichiometrischen Zonen zur thermischen NOx-Bildung. Verbrennt ein homogenes mageres Kraftstoff-Luftgemisch, wird die Bildung von NOx und Ruß stark reduziert, was bereits nachgewiesen wurde.
Solche mageren Gemische können nur durch Selbstzündung verbrannt werden, da auf Grund des zu mageren Gemisches eine Fremdzündung nicht möglich ist. Der Motorbetrieb mit homogenem, selbstgezündeten Gemisch ist nur in einem begrenzten Lastbereich möglich. Der mögliche Lastbereich wird nach oben durch die sehr hohen Umsatzraten selbstgezündeter homogener Gemische begrenzt. Die untere Grenze wird durch die Selbstzündgrenze des mageren Gemisches bestimmt.

Es ist bekannt, SAE-Paper 980505, 1998, Hashizume, T., Miyamato, T., Akagawa, H., Tsujimura, K.: Combustion and Emission Characteristics of Multiple Stage Diesel Combustion, die Last einer mit homogener Selbstzündung arbeitenden Hubkolbenbrennkraftmaschine durch eine Zweiphaseneinspritzung des Kraftstoffs zu steigern. Dabei sind seitlich im Brennraum Einspritzdüsen angeordnet, durch die zur homogenen Gemischbildung Kraftstoff in einer ersten Phase eingespritzt wird. In einer zweiten Phase wird der Kraftstoff durch eine zentral angeordnete, konventionelle Sechs- oder Achtlochdüse zur heterogenen Gemischbildung eingespritzt. Ein solches Verfahren erfordert einen hohen baulichen und steuerungstechnischen Aufwand.

Es ist ferner bekannt, SAE-Paper 950081, 1995, Potz, D., Kreh, A., Warga, J.: Variable-Orifice Geometry verified on the Two-Phase Nozzle (VRD), den Kraftstoff über eine Varioregisterdüse in den Arbeitsraum einzuspritzen. Es handelt sich hierbei um eine nach außen öffnende Einspritzdüse, die zwei in Öffnungsrichtung übereinander angeordnete Lochreihen aufweist. Die Düse wird zur konventionellen heterogenen Dieselverbrennung eingesetzt. Die Verwendung kleiner Löcher führt zu einer Verbesserung der Gemischbildung durch die Steigerung des Einspritzdruckes bei kleiner Einspritzmenge. Eine zu lange Spritzdauer bei großer Einspritzmenge wird durch das Öffnen der zweiten Lochreihe verhindert.
Bei niedriger Last öffnet die Varioregisterdüse nur so weit, daß der Kraftstoff über eine Lochreihe eingespritzt wird, während bei hoher Last über beide Lochreihen der Kraftstoff in den Arbeitsraum gelangt. Die Düsenlöcher der ersten Lochreihe verlaufen zu den Düsenlöchern der zweiten Lochreihe im wesentlichen parallel, so daß sie den gleichen Neigungswinkel zum Kolbenboden aufweisen.

Es ist ferner bekannt, SAE 1999-01-0185, Iwabuchi, Y., Kawai, K., Shoji, T., Takeda, T.: Trail of New Conzept Diesel Combustion System - Premixed Compression-Ignition Combustion -, die Eindringtiefe von Einspritzstrahlen dadurch zu reduzieren, daß bei einer konventionellen Einspritzdüse jeweils zwei Düsenlöcher so angeordnet sind, daß die Einspritzstrahlen in einem bestimmten Abstand der Düsenlöcher gezielt aufeinander treffen. Durch die Kollision der beiden Einspritzstrahlen wird der Impuls der Einzelstrahlen verringert, der Durchmesser der Kraftstofftropfen im Strahl verkleinert und eine Aufweitung des Strahls erreicht. Dadurch wird eine Anlagerung des Kraftstoffs an der Zylinderwand vermieden und gleichzeitig ein größeres Luftvolumen vom Einspritzstrahl erfasst.

Ferner ist aus der DE 42 28 359 A1 eine Einspritzdüse für Brennkraftmaschinen bekannt, die nach außen öffnet und in Öffnungsrichtung längliche Öffnungsquerschnitte aufweist. Dadurch sollen Spritzstrahlen mit scharf gebündeltem Strömungsprofil und mit einem konstanten Strömungswinkel gebildet werden. Ferner ist durch die entgegen der Öffnungsrichtung versetzte Anordnung der Durchbrüche gegenüber der Dichtfläche eines Schließkopfes sichergestellt, dass bei geringem Kraftstoffförderdruck bzw. einer kleinen Drehzahl scharf gebündelte Spritzstrahlen erst gebildet werden, wenn die Ventilnadel einen Leerhub durchlaufen hat. Die Ventilnadel wird durch den Druck einer Einspritzpumpe entgegen der Kraft einer Schließfeder geöffnet. In Verbindung mit der Formgebung des Querschnitts der Düsenlöcher, der Charakteristik der Schließfeder und der Pumprate der Einspritzpumpe lässt sich der zeitliche Einspritzverlauf beeinflussen.

Schließlich ist aus der DE 43 25 904 C2 eine Kraftstoffeinspritzanlage bekannt, bei der eine Hochdruckpumpe den Kraftstoff in eine für alle Einspritzdüsen gemeinsame Versorgungsleitung fördert. Von einem elektronischen Steuergerät angesteuerte Aktuatoren, die nach einem piezoelektrischen oder magnetostriktivem Prinzip arbeiten, wirken direkt oder über ein Übersetzungselement auf eine Ventilnadel des nach außen öffnenden Einspritzventils, wobei die Öffnungsquerschnitte in Öffnungsrichtung länglich und rechteckig ausgestaltet sind.

Aus der DE 43 40 883 A1 ist eine Einspritzdüse mit einem Düsenkörper und einer Ventilnadel bekannt. Die Ventilnadel weist einen Nadelkopf auf, der wiederum mit dem Ventilkörper einen Ventilsitz bildet. Der Nadelkopf umfasst ferner einen Verteilerraum für den Kraftstoff. An den Verteilerraum schließt sich mindestens ein Düsenloch an, das von einer Steuerkante am Düsenkörper in Abhängigkeit von einem Zulaufdruck des Kraftstoffs aufgesteuert wird. Zur Minimierung einer Ablenkung eines Kraftstoffstrahls durch die Steuerkante ist das Düsenloch in zwei oder mehr parallel übereinander angeordnete Kanäle unterteilt.

Die GB 1 521 065 A offenbart ein Verfahren zum Betrieb einer Brennkraftmaschine bei der eine Einspritzdüse Kraftstoff direkt in einen Arbeitsraum einspritzt, der in einem Zylinder zwischen einem Zylinderkopf und einen Kolben gebildet ist und eine Kolbenmulde umfasst. Der Kraftstoff wird unter unterschiedlichen Winkeln zum Kolbenboden eingespritzt.

Der Erfindung liegt die Aufgabe zugrunde, über den Betriebsbereich einer Hubkolbenbrennkraftmaschine mit direkter Kraftstoffeinspritzung die Gemischbildung mit einem geringen Bauaufwand zu verbessern. Sie wird gemäß der Erfindung durch die Merkmale der unabhängigen Verfahrensanspüche 1 und 2 und des unabhängigen Vorrichtungsanspruchs 3 gelöst. Weitere Ausgestaltungen ergeben sich aus 12 abhängigen Ansprüchen.

Nach dem erfindungsgemäßen Verfahren wird zunächst in einem unteren Teillastbereich der Kraftstoff zur heterogenen Gemischbildung kurz vor dem oberen Totpunkt unter einem flachen Winkel zum Kolbenboden zentral in die Kolbenmulde eingespritzt. Dadurch wird gewährleistet, dass sich auch bei den im Verhältnis zur Luftladung geringen Kraftstoffmengen ein zündfähiges Gemisch bildet. In einem höheren Teillastbereich wird der Kraftstoff zu einer homogenen Gemischbildung deutlich vor dem oberen Totpunkt in einem Bereich von 180° bis 20° Kurbelwinkel vor dem oberen Totpunkt zum Teil unter einem steileren Winkel zum Kolbenboden eingespritzt. Dadurch wird er gleichmäßig auf die Luftladung des Arbeitsraums verteilt, so dass ein weitgehend homogenes, mageres Gemisch gebildet wird. Im Volllastbereich, wenn die einzuspritzende Kraftstoffmenge relativ zur Luftladung im Arbeitsraum sehr groß ist, wird der Kraftstoff in mehreren Phasen eingespritzt, und zwar in einer ersten Phase deutlich vor dem oberen Totpunkt, in einem Bereich von 180° bis 20° Kurbelwinkel vor dem oberen Totpunkt, mit steilem und flachem Winkel zum Kolbenboden mit einer weitgehend homogen Gemischbildung und in einer weiteren Phase zur heterogenen Gemischbildung in einem Bereich um den oberen Totpunkt unter einem flacheren Winkel zum Kolbenboden. Die Einspritzung der ersten Phase kann auch getaktet, d.h. z.B. 5-fach Einspritzung erfolgen. Dadurch wird bezweckt, dass zum Zeitpunkt, zu dem die Verdichtungstemperatur die Zündtemperatur erreicht, nur eine begrenzte Menge an zündfähigem Kraftstoff-Luftgemisch vorliegt, die einerseits eine vollständige Verbrennung ermöglicht, andererseits aber keine klopfende Verbrennung verursacht. Der später eingespritzte Kraftstoff verbrennt aufgrund der heterogenen Gemischbildung ohne allzu hohe Druckanstiege.

Alternativ zur mehrphasigen Einspritzung im oberen Teillast-bereich und Volllastbereich wird in diesen Lastbereichen auch eine einphasige Einspritzung angewendet. Dabei wird der Kraftstoff wie bei unterer Teillast unter einem flachen Winkel kurz vor dem oberen Totpunkt zur heterogenen Gemischbildung eingespritzt.

Das erfindungsgemäße Verfahren kann mit nur einer Einspritzdüse durchgeführt werden, die Einspritzstrahlen mit unterschiedlicher Neigung zum Kolbenboden erzeugt. Dabei kann die Neigung der Kraftstoffstrahlen selektiv angesteuert werden, indem zum einen in Öffnungsrichtung der Ventilnadel versetzt zueinander mehrere, vorzugsweise zwei, Reihen von Düsenlöchern vorgesehen sind, von denen die vom Nadelkopf weiter entfernten Düsenlöcher einen spitzeren Winkel zu einer Längsachse der Ventilnadel aufweisen als die näher gelegenen, oder indem der Winkel des Strahlvektors der Einspritzstrahlen zum Kolbenboden mit dem Öffnungshub variabel ist. Damit sich im ersten Fall die Einspritzstrahlen mit dem spitzeren Winkel zur Längsachse der Ventilnadel nicht mit den steileren Einspritzstrahlen kreuzen, ist es zweckmäßig, die Düsenlöcher in Umfangsrichtung entsprechend zu versetzen.

Im zweiten Fall kann der Strömungsvektor leicht dadurch modifiziert werden, dass in Öffnungsrichtung längliche Mündungsquerschnitte der Düsenlöcher vorgesehen werden. Der Einspritzstrahl wird bei teilweise geöffnetem Mündungsquerschnitt von der Steuerkante in Richtung Kolbenboden abgelenkt, so dass ein steilerer Strahlvektor entsteht, während bei vollständiger Öffnung des Mündungsquerschnitts der Strahlvektor flach zum Kolbenboden verläuft. Zweckmäßigerweise wird die Ventilsitzfläche am Nadelkopf soweit in Öffnungsrichtung zurückgenommen, dass sie die Ablenkung der Einspritzstrahlen mit einem steileren Winkel zum Kolbenboden nicht behindert.

Im zweiten Fall sind die Düsenlöcher ohne Versatz zueinander so anzuordnen, dass die unter einem spitzeren Winkel angeordneten, oben liegenden Einspritzstrahlen die untenliegenden Einspritzstrahlen in einer Entfernung gezielt treffen. Durch die gezielte Kollision der beiden Strahlen wird die absolute Eindringtiefe des Kraftstoffs deutlich reduziert. Eine Wandanlagerung des Kraftstoffs, bei der Einspritzung zu frühen Grad Kurbelwinkeln gegen niedrigen Brennraumdruck, kann dadurch vermieden werden. Gleichzeitig reißt der Einspritzstrahl bei der Kollision deutlich weiter auf, wodurch sich kleinere Kraftstofftropfen bilden und ein größeres Luftvolumen erfasst wird.

Die Lochdurchmesser der unteren und oberen Düsenlöcher sowie die Strahlkegelwinkel muss gezielt aufeinander abgestimmt werden.

Damit zur homogenen Gemischbildung die gesamte Luftladung des Arbeitsraums gleichmäßig erfasst wird, ist es vorteilhaft, dass die Ventilnadel während einer Einspritzung in Intervallen aufgesteuert wird. Durch die unterschiedlichen Winkel der Einspritzstrahlen und Strahlvektoren werden sowohl die Randbereiche des Arbeitsraums als auch die zentralen Bereiche der Kolbenmulde optimal erfasst. Die Einspritzdüsen werden zweckmäßigerweise durch eine elektronische Steuereinheit über piezoelektrische oder magnetostriktive Aktuatoren direkt oder unter Zwischenschaltung eines Übersetzungselements angesteuert.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

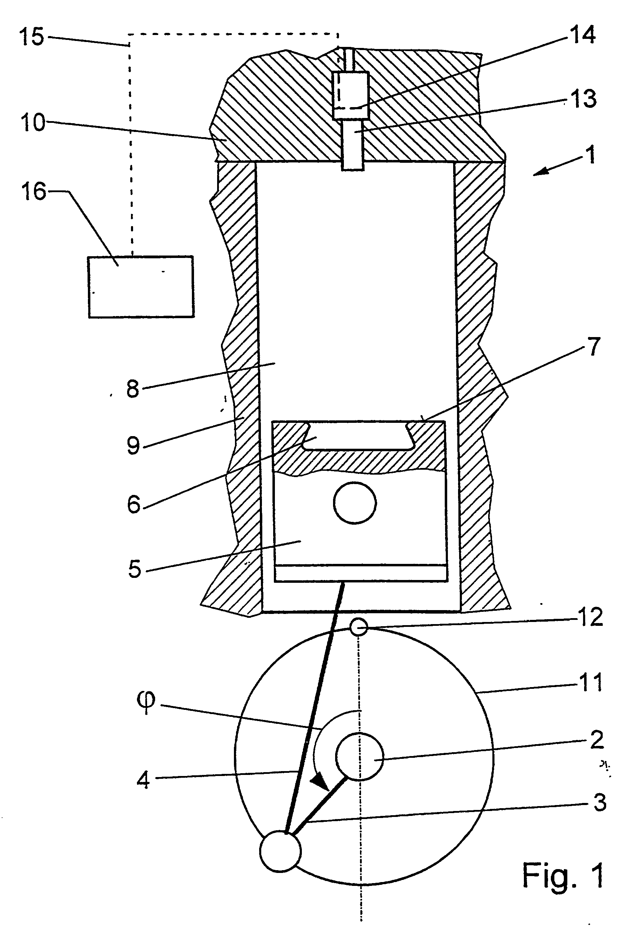

- Fig. 1: einen schematischen Querschnitt durch eine Hubkolbenbrennkraftmaschine,
- Fig. 2: eine Kraftstoffeinspritzung in einem unteren Teillastbereich,
- Fig. 3: eine Kraftstoffeinspritzung in einem mittleren Teillastbereich,
- Fig. 4: die erste Phase einer Kraftstoffeinspritzung in einem oberen Teillast- oder Vollastbereich,
- Fig. 5: die zweite Phase einer Kraftstoffeinspritzung in einem oberen Teillast- oder Vollastbereich,
- Fig. 6: eine Teilansicht einer erfindungsgemässen Einspritzdüse mit mehreren in Öffnungsrichtung versetzt angeordneten Spritzkanälen,
- Fig. 7: einen Teilschnitt durch eine Einspritzdüse nach Fig. 6 in einem halb geöffneten Zustand,
- Fig. 8: einen Teilschnitt durch eine bekannte Einspritzdüse mit Schlitzkanälen in einem halb geöffneten Zustand,
- Fig. 9: Varianten von Mündungsquerschnitten eines Schlitzkanals nach Fig. 8,
- Fig. 10: ein schematisches Kennfeld einer Hubkolbenbrennkraftmaschine, bei dem der mittlere indizierte Druck Pₘₑ über der Drehzahl aufgetragen ist,

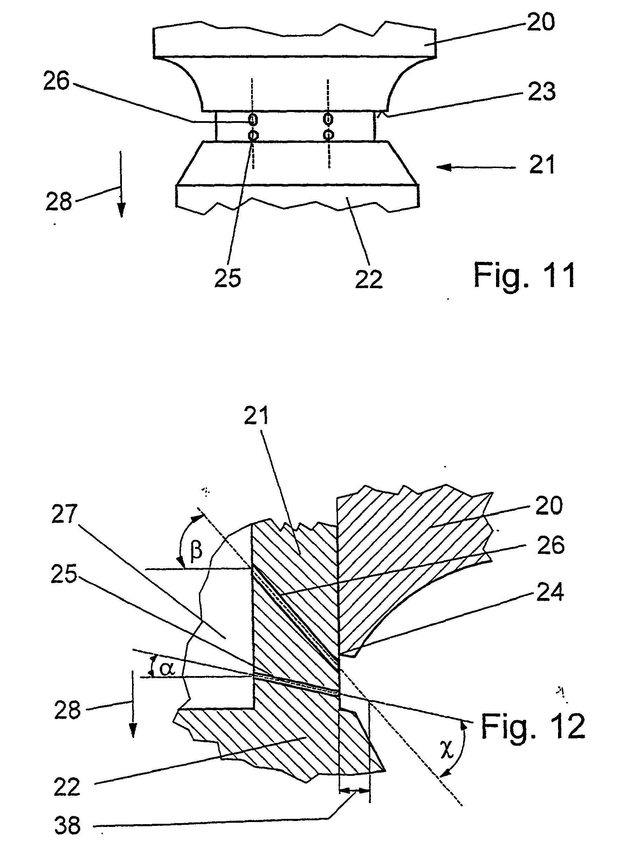

- Fig. 11: eine Teilansicht einer erfindungsgemässen Einspritzdüse mit mehreren in einer Linie übereinander angeordneten Düsenlöchern und
- Fig. 12: einen Teilschnitt durch eine Einspritzdüse nach Fig. 11 in einem halb geöffneten Zustand.

Bei einer Hubkolbenbrennkraftmaschine 1 treibt ein Kolben 5, der in einem Zylinder 9 geführt ist, über eine Pleuelstange 4 auf die Kurbel 3 einer Kurbelwelle 2. Zwischen dem Kolben 5 und einem Zylinderkopf 10 wird im Zylinder 9 ein Arbeitsraum 8 gebildet, der eine in den Kolbenboden 7 eingelassene Kolbenmulde 6 umfaßt.

Bei der Drehung der Kurbel 3 auf einen Kurbelkreis im Uhrzeigersinn verkleinert sich der Arbeitsraum 8, wobei die in ihm eingeschlossene Luft verdichtet wird. Der Ladungswechsel der Luft im Arbeitsraum 8 erfolgt über Gaswechselventile und Gaskanäle im Zylinderkopf 10, die nicht näher dargestellt sind.

Mit dem Erreichen eines oberen Totpunktes 12 der Kurbel 3 ist das Ende der Verdichtung erreicht, bei dem der Arbeitsraum 8 sein kleinstes Volumen annimmt und die höchste Verdichtungstemperatur erreicht wird. Die aktuelle Lage des Kolbens 5 zum Zylinderkopf 10 wird durch den Kurbelwinkel ϕ in Bezug auf den oberen Totpunkt 12 bestimmt.

Eine Einspritzdüse 13 ist zentral zur Grundfläche des Zylinders 9 im Zylinderkopf 10 angeordnet und ragt ein wenig in den Arbeitsraum 8. Sie besitzt einen Aktuator 14, der magnetostriktiv oder piezoelektrisch arbeitet, auf eine Ventilnadel 21 der Einspritzdüse 13 wirkt und über eine Signalleitung 15 von einer elektronischen Steuereinheit 16, der Motorsteuerung, angesteuert wird.

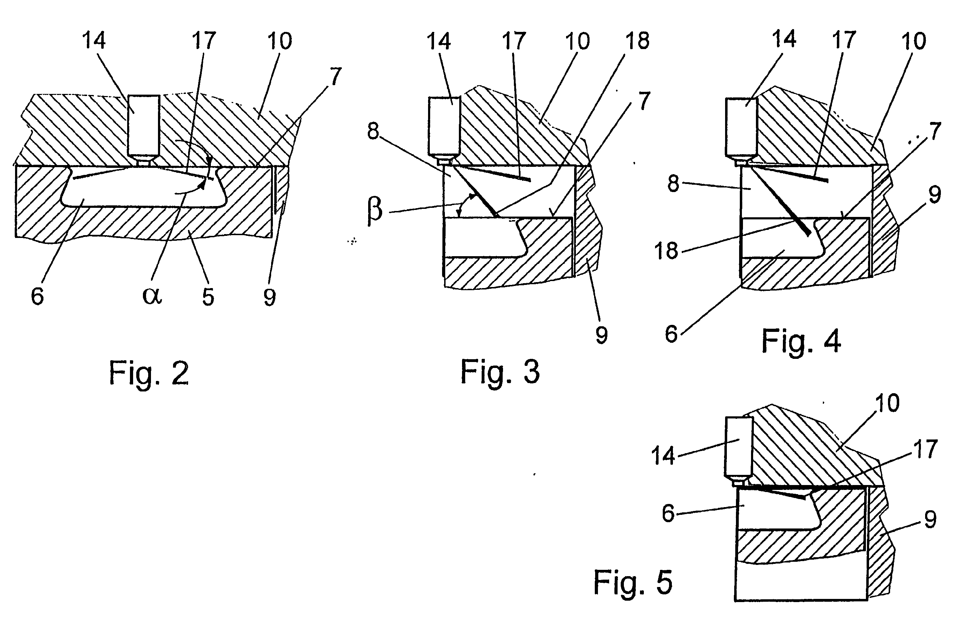

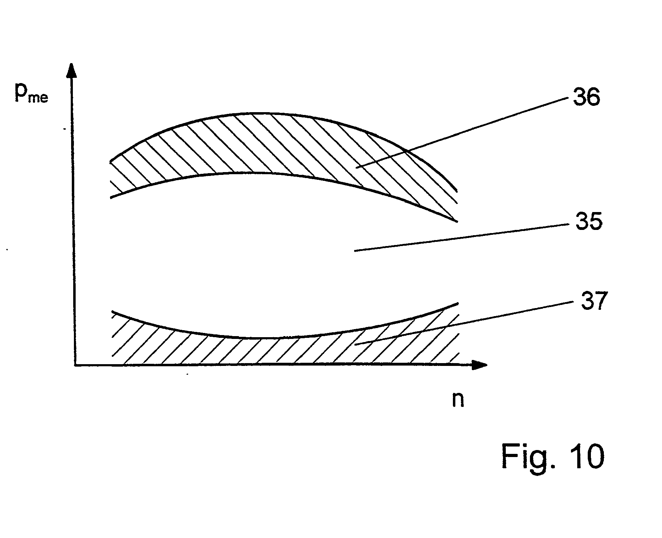

Fig. 2 zeigt die Kraftstoffeinspritzung in einem unteren Teillastbereich 37 (Fig. 10). Der Kolben 5 befindet sich im Bereich des oberen Totpunkts 12, während die Einspritzdüse 13 den Kraftstoff in die Kolbenmulde 6 zur heterogenen Gemischbildung einspritzt. Dabei bilden die Einspritzstrahlen 17 einen kleinen Winkel α zum Kolbenboden 7.

Im Teillastbereich 35 (Fig. 10) verteilt die Einspritzdüse 13 den Kraftstoff weitgehend homogen auf die Luftladung des Arbeitsraums 8. Dabei beginnt die Kraftstoffeinspritzung deutlich früher. Der Kraftstoff wird gleichzeitig über die Kraftstoffstrahlen 17 mit einem kleinen Winkel α eingespritzt, die insbesondere bis in die Randbereiche des Arbeitsraums 8 reichen, und über Kraftstoffstrahlen 19 mit einem steileren Winkel β, die den zentralen Bereich einschließlich die Kolbenmulde 6 erfassen.

Im oberen Teillastbereich und im Vollastbereich 36 (Fig. 10) wird der Kraftstoff in mehreren Phasen, vorzugsweise in zwei Phasen, eingebracht, und zwar in einer ersten Phase, die erste Phase kann auch getaktet erfolgen, d.h., Mehrfacheinspritzungen von kleinen Mengen (Fig. 4), die im wesentlichen der homogenen Gemischaufbereitung nach Fig. 3 entspricht und in einer zweiten Phase nach Fig. 5, die im wesentlichen der heterogenen Gemischaufbereitung nach Fig. 2 entspricht.

Alternativ zur mehrphasigen Einspritzung im oberen Teillastbereich und Vollastbereich wird in diesen Lastbereichen auch eine einphasige Einspritzung angewendet, d.h. der gesamte Kraftstoff wird im Bereich des oberen Totpunkts zur heterogenen Gemischbildung unter kleinem Winkel α gemäß Fig. 5 eingespritzt.

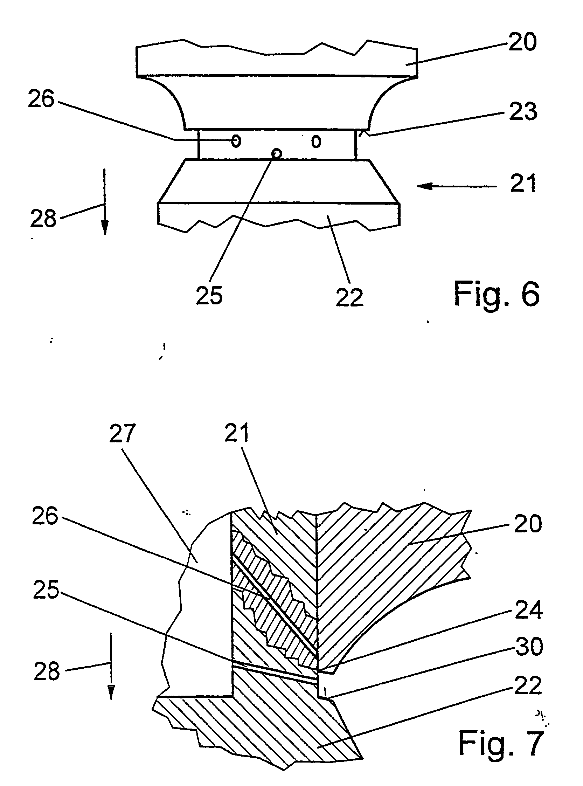

Die Einspritzdüse 13 nach Fig. 6 und 7 besitzt einen Düsenkörper 20, in dem eine Ventilnadel 21 geführt ist. Diese weist einen Nadelkopf 22 mit einer Ventilsitzfläche 30 auf. Die Ventilnadel 21 öffnet in Öffnungsrichtung 28 nach außen. Im geschlossenen Zustand der Einspritzdüse 13 liegt die Ventilsitzfläche 30 an einem Ventilsitz 23 des Düsenkörpers 20 an.

Im geöffneten Zustand gibt eine Steuerkante 24 entsprechend dem Hub der Ventilnadel 21 Düsenlöcher 25 und 26 frei, wobei die Düsenlöcher 26 einen steileren Winkel β aufweisen als die Düsenlöcher 25, die näher am Nadelkopf 22 gelegen sind. Die Düsenlöcher 26 münden außerdem in Umfangsrichtung zu den Düsenlöchern25 versetzt, so daß sich ihre Einspritzstrahlen 18 und 19 nicht behindern.

Im zweiten Fall sind die Düsenlöcher 25, 26 ohne Versatz zueinander so anzuordnen, daß die unter einem steileren Winkel β angeordneten, oben liegenden Einspritzstrahlen 18 die untenliegenden Einspritzstrahlen 17 in einer Entfernung 38 gezielt treffen. Durch die gezielte Kollision der beiden Strahlen 17, 18 wird die absolute Eindringtiefe des Kraftstoffs deutlich reduziert. Eine Wandanlagerung des Kraftstoffs, bei der Einspritzung zu frühen Grad Kurbelwinkeln gegen niedrigen Brennraumdruck, kann dadurch vermieden werden. Gleichzeitig reißt der Einspritzstrahl 17, 18 bei der Kollision deutlich weiter auf, wodurch sich kleinere Kraftstofftropfen bilden und ein größeres Luftvolumen erfaßt wird.

Die Lochdurchmesser der unteren und oberen Düsenlöcher 25, 26 sowie die Strahlkegelwinkel müssen gezielt aufeinander abgestimmt werden.

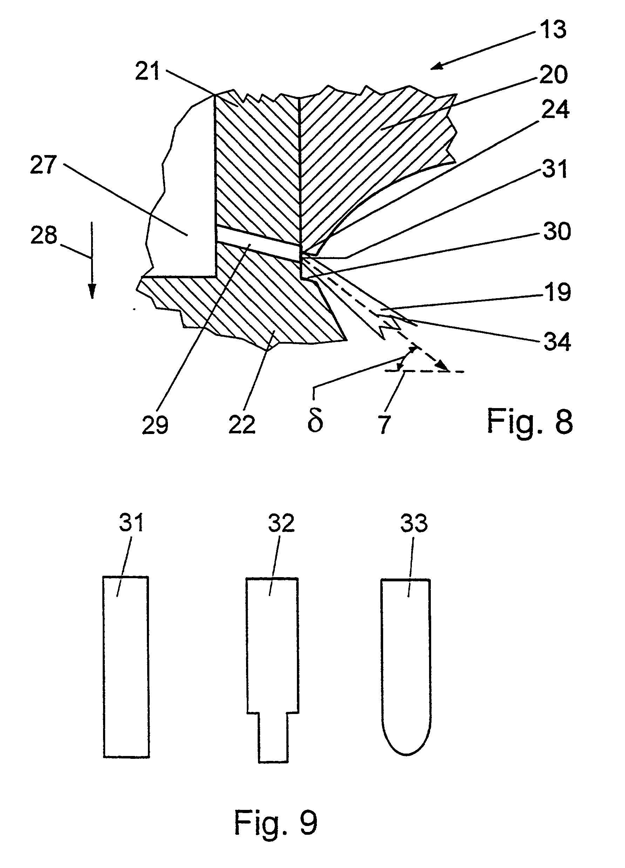

Die bekannte Einspritzdüse 13 nach Fig. 8 besitzt auf den Umfang verteilte Schlitzkanäle 29, die den Verteilerraum 27 mit einem in Öffnungsrichtung 28 länglichen Mündungsquerschnitt 31, 32, 33 am äußeren Umfang der Ventilnadel 21 verbindet. Der Mündungsquerschnitt 31, 32, 33 wird von einer Steuerkante 24 am Düsenkörper 20 mehr oder weniger aufgesteuert, wobei die Steuerkante 24 einen austretenden Einspritzstrahl 19 mit zunehmender Überdeckung des Mündungsquerschnitts 31, 32, 33 durch die Steuerkante 24 mehr zum Kolbenboden 7 abgelenkt wird. Dadurch bildet der Strahlvektor 34 des Einspritzstrahls 19 einen vom Öffnungshub abhängigen Neigungswinkel δ zum Kolbenboden.

Im unteren Teillastbereich 37 und im oberen Teillastbereich, bzw. in der Vollast 36, wird der Kraftstoff zur heterogenen Gemischbildung ohne Strahlablenkung nach unten bei voll geöffnetem Mündungsquerschnitt 31, 32, 33 mit flachem Winkel im Bereich des oberen Totpunktes 12 eingespritzt.

Zur homogenen Gemischbildung im mittleren Teillastbereich wird der Mündungsquerschnitt 31, 32, 33 nur teilweise freigegeben, so daß eine Strahlablenkung nach unten und eine feine Zerstäubung des Kraftstoffes stattfindet. Die Einspritzung erfolgt dabei in einem Bereich deutlich vor dem oberen Totpunkt 12. Durch eine intermittierende Betätigung der Ventilnadel 21 erreicht man eine optimale homogene Verteilung des Kraftstoffs auf die Luftladung. Im Vollastbereich wird der Kraftstoff in zwei Phasen eingespritzt, und zwar in einer ersten Phase in einem Bereich zwischen 180° und 20° Kurbelwinkel ϕ vor dem oberen Totpunkt 12 zu einer homogenen Gemischbildung und in einem sich anschließenden Bereich um den oberen Totpunkt 12 zu einer heterogenen Gemischbildung. Dadurch kann eine sehr große Kraftstoffmenge schadstoffarm und klopffrei verbrannt werden.

Alternativ zur zweiphasigen Einspritzung im oberen Teillastbereich oder Vollastbereich wird in diesen Lastbereichen auch eine einphasige Einspritzung angewendet, d.h. der gesamte Kraftstoff wird im Bereich des oberen Totpunkts bei voll geöffneten Schlitzen zur heterogenen Gemischbildung eingespritzt.

Die Fig. 9 zeigt verschiedene Formen der Mündungsquerschnitte 31, 32, 33 nach Fig. 8.

## Patentansprüche

1. Verfahren zum Betrieb einer Hubkolbenbrennkraftmaschine (1), bei der eine Einspritzdüse (13) Kraftstoff direkt in einen Arbeitsraum (8) einspritzt, der in einem Zylinder (9) zwischen einem Zylinderkopf (10) und einem Kolben (5) gebildet ist und eine Kolbenmulde (6) umfasst,
**dadurch gekennzeichnet, dass**
- in einem unteren Teillastbereich (37) der Kraftstoff zur heterogenen Gemischbildung kurz vor dem oberen Totpunkt (12) unter einem flachen Winkel (α) zum Kolbenboden (7) zentral in die Kolbenmulde (6) eingespritzt wird,
- in einem anschließenden Teillastbereich (35) der Kraftstoff zu einer homogenen Gemischbildung in einem Bereich wenigstens zum Teil unter einem steileren Winkel (β) zum Kolbenboden (7) eingespritzt wird und
- in einem Volllastbereich (36) ein Teil des Kraftstoffs zunächst zur homogenen Gemischbildung in einem Bereich von 180 Grad bis 20 Grad Kurbelwinkel (ϕ) vor dem oberen Totpunkt (12) unter einem steileren Winkel (β) zum Kolbenboden (7) und der Rest zur heterogenen Gemischbildung in einem Bereich um den oberen Totpunkt (12) unter einem flacheren Winkel (α) zum Kolbenboden (7) in die Kolbenmulde (6) eingespritzt wird.

2. Verfahren nach dem Oberbegriff von Anspruch 1,
**dadurch gekennzeichnet, dass**
- in einem unteren Teillastbereich (37) der Kraftstoff zur heterogenen Gemischbildung kurz vor dem oberen Totpunkt (12) unter einem flachen Winkel (α) zum Kolbenboden (7) zentral in die Kolbenmulde (6) eingespritzt wird,
- in einem anschließenden Teillastbereich (35) der Kraftstoff zu einer homogenen Gemischbildung in einem Bereich wenigstens zum Teil unter einem steileren Winkel (β) zum Kolbenboden (7) eingespritzt wird und
- in einem oberen Teillastbereich oder Volllastbereich der gesamte Kraftstoff zur heterogenen Gemischbildung im Bereich des oberen Totpunkts (12) unter einem flachen Winkel (α) zum Kolbenboden (7) eingespritzt wird.

3. Einspritzdüse zur Durchführung des Verfahrens nach einem der Ansprüche 1 oder 2, mit einer Ventilnadel (21), die am freien Ende einen Nadelkopf (22) hat, der mit einer Kante des Düsenkörpers (20) einen Ventilsitz (23) bildet, und einen Verteilerraum (27) aufweist, an den sich erste Düsenlöcher (25) und zweite Düsenlöcher (26) anschließen, die in Öffnungsrichtung (28) vor dem Ventilsitz (23) aus der Mantelfläche der Ventilnadel (21) austreten, wobei die zweiten Düsenlöcher (26) relativ zu den ersten Düsenlöchern (25) entgegen der Öffnungsrichtung (28) der Düsennadel (21) versetzt angeordnet sind,
**dadurch gekennzeichnet, dass**
die zweiten Düsenlöcher (26) relativ zu den ersten Düsenlöchern (25) mit einem spitzeren Winkel zu einer Längsachse der Ventilnadel (21) ausgeführt sind.

4. Einspritzdüse nach Anspruch 3,
**dadurch gekennzeichnet, dass**
die zweiten Düsenlöcher (26) relativ zu den ersten Düsenlöchern (25) direkt in einer Linie übereinander so angeordnet sind, dass die Einspritzstrahlen (17, 18) unter einem Winkel (χ) in einer bestimmten Entfernung (38) von der Einspritzdüse (13) aufeinander treffen.

5. Einspritzdüse nach Anspruch 3,
**dadurch gekennzeichnet, dass**
die zweiten Düsenlöcher (26) relativ zu den ersten Düsenlöchern (25) in Umfangsrichtung versetzt angeordnet sind.

6. Einspritzdüse nach einem der Ansprüche 3 bis 6,
**dadurch gekennzeichnet, dass**
eine Ventilsitzfläche (30) am Nadelkopf (22) soweit in Öffnungsrichtung (28) zurückgenommen ist, dass sie die Einspritzstrahlen (18) mit einem spitzeren Winkel nicht behindern.

7. Einspritzdüse nach einem der Ansprüche 4 oder 5,
**dadurch gekennzeichnet, dass**
die Ventilnadel (21) während einer Einspritzung in Intervallen aufgesteuert wird.

8. Einspritzdüse nach einem der Ansprüche 3 bis 7,
**dadurch gekennzeichnet, dass**
eine elektronische Steuereinheit (16) die Einspritzdüse (13) über einen piezoelektrischen oder magnetostriktiven Aktuator (14) gegebenenfalls unter Zwischenschaltung eines Übersetzungselements ansteuert.

9. Hubkolbenbrennkraftmaschine (1) mit einem Arbeitsraum (8), der in einem Zylinder (9) zwischen einem Zylinderkopf (10) und einem Kolben (5) gebildet ist und eine Kolbenmulde (6) umfasst, und mit einer Einspritzdüse (13), über die Kraftstoff direkt in den Arbeitsraum (8) einspritzbar ist,
**dadurch gekennzeichnet, dass**
die Einspritzdüse (13) gemäß einem der Ansprüche 3 bis 8 ausgeführt ist.

## Claims

1. Method for operating a reciprocating-piston internal combustion engine (1), in which method an injection nozzle (13) injects fuel directly into a working space (8) which is formed in a cylinder (9) between a cylinder head (10) and a piston (5) and which comprises a piston depression (6),
**characterized in that**
- in a lower part-load range (37), the fuel is, for heterogeneous mixture formation, injected centrally into the piston depression (6) shortly before top dead centre (12) at a shallow angle (α) with respect to the piston head (7),
- in a subsequent part-load range (35), the fuel is, for homogeneous mixture formation, injected in one region at least in part at a relatively steep angle (β) with respect to the piston head (7), and
- in a full-load range (36), part of the fuel is firstly, for homogeneous mixture formation, injected into the piston depression (6) in a range from 180 degrees to 20 degrees crank angle (ϕ) before top dead centre (12) at a relatively steep angle (β) with respect to the piston head (7), and the rest is, for heterogeneous mixture formation, injected into the piston depression (6) in a range around top dead centre (12) at a relatively shallow angle (α) with respect to the piston head (7).

2. Method according to the preamble of Claim 1,
**characterized in that**
- in a lower part-load range (37), the fuel is, for heterogeneous mixture formation, injected centrally into the piston depression (6) shortly before top dead centre (12) at a shallow angle (α) with respect to the piston head (7),
- in a subsequent part-load range (35), the fuel is, for homogeneous mixture formation, injected in one region at least in part at a relatively steep angle (β) with respect to the piston head (7), and
- in an upper part-load range or full-load range, all of the fuel is, for heterogeneous mixture formation, injected in the region of top dead centre (12) at a shallow angle (α) with respect to the piston head (7).

3. Injection nozzle for carrying out the method according to one of Claims 1 and 2, having a valve needle (21) which has, at the free end, a needle head (22) which forms a valve seat (23) with an edge of the nozzle body (20) and which has a distributor space (27) which is adjoined by first nozzle holes (25) and second nozzle holes (26) which emerge from the lateral surface of the valve needle (21) upstream of the valve seat (23) in the opening direction (28), with the second nozzle holes (26) being arranged offset relative to the first nozzle holes (25) counter to the opening direction (28) of the nozzle needle (21),
**characterized in that**,
relative to the first nozzle holes (25), the second nozzle holes (26) are formed with a more acute angle with respect to a longitudinal axis of the valve needle (21).

4. Injection nozzle according to Claim 3,
**characterized in that**
the second nozzle holes (26) and the first nozzle holes (25) are arranged directly one above the other in a line, such that the injection jets (17, 18) impinge on one another at an angle (X) at a certain distance (38) from the injection nozzle (13).

5. Injection nozzle according to Claim 3,
**characterized in that**
the second nozzle holes (26) are arranged so as to be arranged offset relative to the first nozzle holes (25) in the circumferential direction.

6. Injection nozzle according to one of Claims 3 to 6,
**characterized in that**
a valve seat surface (30) on the needle head (22) is recessed in the opening direction (28) to such an extent that it does not impede the injection jets (18) with a more acute angle.

7. Injection nozzle according to one of Claims 4 and 5,
**characterized in that**
the valve needle (21) is opened in a controlled fashion at intervals during an injection.

8. Injection nozzle according to one of Claims 3 to 7,
**characterized in that**
an electronic control unit (16) activates the injection nozzle (13) by means of a piezoelectric or magnetostrictive actuator (14), if appropriate with the interposition of a booster element.

9. Reciprocating-piston internal combustion engine (1) having a working space (8) which is formed in a cylinder (9) between a cylinder head (10) and a piston (5) and which has a piston depression (6), and having an injection nozzle (13), by means of which fuel can be injected directly into the working space (8),
**characterized in that**
the injection nozzle (13) is embodied according to one of Claims 3 to 8.

## Revendications

1. Procédé pour faire fonctionner un moteur à combustion interne (1) à piston alternatif, dans lequel une buse d'injection ou injecteur (13) injecte du carburant directement dans une chambre de travail (8), qui est formée dans un cylindre (9) entre une culasse (10) et un piston (5) et comprend une cavité de piston (6),
**caractérisé en ce que**
- dans une plage de charge partielle inférieure (37), le carburant, en vue d'une formation de mélange hétérogène, est injecté juste avant le point mort haut (12), sous un angle (α) plat par rapport à la tête de piston (7), de manière centrale dans la cavité de piston (6),
- dans une plage de charge partielle (35) qui succède à la précédente, le carburant, en vue d'une formation de mélange homogène, est injecté, dans une zone, au moins en partie sous un angle (β) plus pentu par rapport à la tête de piston (7), et
- dans une plage de pleine charge (36), une partie du carburant est tout d'abord, en vue d'une formation de mélange homogène, injectée dans une plage de 180 degrés à 20 degrés d'angle de vilebrequin (ϕ) avant le point mort haut (12), sous un angle (β) plus pentu par rapport à la tête de piston (7), et le reste, en vue d'une formation de mélange hétérogène, est injecté dans une plage autour du point mort haut (12), sous un angle (α) plus plat par rapport à la tête de piston (7), dans la cavité de piston (6).

2. Procédé selon le préambule de la revendication 1,
**caractérisé en ce que**
- dans une plage de charge partielle inférieure (37), le carburant, en vue d'une formation de mélange hétérogène, est injecté juste avant le point mort haut (12), sous un angle (α) plat par rapport à la tête de piston (7), de manière centrale dans la cavité de piston (6),
- dans une plage de charge partielle (35) qui succède à la précédente, le carburant, en vue d'une formation de mélange homogène, est injecté, dans une zone, au moins en partie sous un angle (β) plus pentu par rapport à la tête de piston (7), et
- dans une plage de charge partielle supérieure ou de pleine charge, la totalité du carburant, en vue d'une formation de mélange hétérogène, est injectée dans la zone du point mort haut (12), sous un angle (α) plat par rapport à la tête de piston (7).

3. Injecteur ou buse d'injection pour la mise en oeuvre du procédé selon l'une des revendications 1 ou 2, comprenant une aiguille ou un pointeau de soupape (21) qui possède à l'extrémité libre, une tête de pointeau (22) formant, avec un bord du corps d'injecteur (20), un siège de soupape (23), et l'injecteur présentant également une chambre de distribution (27) à laquelle se raccordent des premiers orifices d'injecteur (25) et des deuxièmes orifices d'injecteur (26), qui, dans la direction d'ouverture (28), débouchent dans la surface enveloppe périphérique du pointeau de soupape (21) avant le siège de soupape (23), les deuxièmes orifices d'injecteur (26) étant agencés de manière à être décalés par rapport aux premiers orifices d'injecteur (25) à l'encontre de la direction d'ouverture (28) du pointeau d'injecteur (21),
**caractérisé en ce que**
les deuxièmes orifices d'injecteur (26) sont réalisés, par rapport aux premiers orifices d'injecteur (25), de manière à former un angle plus aigu par rapport à un axe longitudinal du pointeau de soupape (21).

4. Injecteur selon la revendication 3,
**caractérisé**
**en ce que** les deuxièmes orifices d'injecteur (26) sont agencés de manière alignée par rapport aux premiers orifices d'injecteur (25), directement les uns au-dessus des autres, de façon telle que les jets d'injection (17, 18) se croisent en formant un angle (χ) à une distance déterminée (38) de l'injecteur (13).

5. Injecteur selon la revendication 3,
**caractérisé**
**en ce que** les deuxièmes orifices d'injecteur (26) sont agencés de manière décalée en direction périphérique par rapport aux premiers orifices d'injecteur (25).

6. Injecteur selon l'une des revendications 3 à 5,
**caractérisé**
**en ce qu'**une surface de siège de soupape (30) sur la tête de pointeau (22) est dégagée en retrait dans la direction d'ouverture (28) de manière à ne pas perturber les jets d'injection (18) avec un angle plus aigu ou plus pentu.

7. Injecteur selon l'une des revendications 4 ou 5,
**caractérisé**
**en ce que** le pointeau de soupape (21) est commandé en ouverture, par intervalles, pendant une phase d'injection.

8. Injecteur selon l'une des revendications 3 à 7,
**caractérisé**
**en ce qu'**une unité de commande électronique (16) commande l'injecteur (13) par l'intermédiaire d'un actionneur (14) piézoélectrique ou magnétostrictif, le cas échéant avec interposition d'un élément de démultiplication.

9. Moteur à combustion interne (1) à piston alternatif, comprenant une chambre de travail (8), qui est formée dans un cylindre (9) entre une culasse (10) et un piston (5) et comprend une cavité de piston (6), et comprenant également un injecteur (13) par l'intermédiaire duquel du carburant peut être injecté directement dans la chambre de travail (8),
**caractérisé**
**en ce que** l'injecteur (13) est réalisé selon l'une des revendications 3 à 8.
